# FASCICULE DE BREVET EUROPEEN

(11) **EP 1 929 539 B1**
(45) Date de publication et mention de la délivrance du brevet: **10.03.2010**
(21) Numéro de dépôt: 06793818.3
(22) Date de dépôt: 25.09.2006
(51) Int. Cl.: H01L 31/00, G01T 1/16, H01L 39/24

(54) **DETECTEUR OPTIQUE ULTRASENSIBLE, A GRANDE RESOLUTION TEMPORELLE, UTILISANT UN MODE A FUITES D'UN GUIDE D'ONDE PLAN, ET PROCEDES DE FABRICATION DE CE DETECTEUR**
EINEN PLANARWELLENLEITER-LECKMODUS VERWENDENDER ZEITLICH HOCH AUFLÖSENDER ULTRAEMPFINDLICHER OPTISCHER SENSOR UND HERSTELLUNGSVERFAHREN DAFÜR
HIGH TIME-RESOLUTION ULTRASENSITIVE OPTICAL SENSOR USING A PLANAR WAVEGUIDE LEAKAGE MODE, AND METHODS FOR MAKING SAME

(30) Priorité: 28.09.2005 FR 0552923
(43) Date de publication de la demande: 11.06.2008
(73) Titulaire: COMMISSARIAT A L'ENERGIE ATOMIQUE, 75015 Paris (FR)
(72) Inventeur: FREY, Laurent, F-38600 Fontaine (FR)
(74) Mandataire: Poulin, Gérard
(86) Numéro de dépôt international: PCT/EP2006/066714
(87) Numéro de publication internationale: WO 2007/036510

(56) Documents cités:
- DE-C1- 10 024 366
- FR-A- 2 812 455
- FR-A- 2 871 571
- US-A- 5 532 485
- A. CHRIST ET AL: "Optical properties of planar metallic photonic crystal structures: Experiment and theory." PHYS. REV. B, vol. 70, 28 septembre 2004 (2004-09-28), pages 125113-1-125113-15, XP002388153

## Description

### DOMAINE TECHNIQUE

La présente invention concerne un détecteur optique ultrasensible, à grande résolution temporelle, et en particulier un détecteur supraconducteur de photon unique (en anglais, *superconducting single photon detector*), plus simplement appelé SSPD.

Le détecteur objet de l'invention utilise un mode à fuites d'un guide d'onde plan.

La présente invention concerne aussi des procédés de fabrication de ce détecteur.

Elle s'applique notamment à la détection et à la localisation des défauts de fonctionnement d'un circuit intégré semi-conducteur, par détection de l'émission de photons spécifiques par des transistors défaillants.

Elle s'applique aussi aux circuits de réception et de routage pour les télécommunications à très haut débit, en particulier à ceux qui sont destinés aux satellites de télécommunication, à cause de la très faible dissipation thermique du détecteur objet de l'invention.

L'invention s'applique en outre au codage et à la détection de la clé du code quantique dans un système de cryptographie.

Elle s'applique également à la fabrication de matrices de détecteurs pour l'imagerie de très haute sensibilité, ainsi qu'à la tomographie à un photon ou à photons corrélés.

### ÉTAT DE LA TECHNIQUE ANTÉRIEURE

Des techniques émergentes, telles que le calcul et la cryptographie quantique, le test de défaillance de circuits intégrés en micro-électronique, l'imagerie médicale à détection photonique, la détection d'objets biologiques ou la détection de très faibles signaux pour les télécommunications ou l'astronomie, nécessitent des détecteurs de rayonnements, en particulier dans le domaine visible ou le domaine proche infra-rouge, qui soient très rapides, aient une gigue (en anglais, *jitter*) très faible, fassent très peu de bruit et soient extrêmement sensibles : ils doivent être capables de détecter de très faibles flux, voire un photon unique.

A ce sujet, on se reportera au document [Verevkin 03] ou au document [Romestain 04] qui, comme les autres documents cités par la suite, sont mentionnés à la fin de la présente description.

Les SSPD ont potentiellement toutes les qualités mentionnées ci-dessus et sont de bons candidats pour remplacer les photodiodes à avalanche et les tubes photomultiplicateurs actuels, dont les performances sont limitées, particulièrement dans le domaine infrarouge.

Les SSPD existent sous forme de STJ, c'est-à-dire de jonctions tunnel supraconductrices (en anglais, *superconducting tunnel junctions*), et sous forme de bolomètres, parmi lesquels on trouve les bolomètres appelés HEB, à savoir les bolomètres à électrons chauds (en anglais, *hot electron bolometers*), qui sont les plus rapides.

Les HEB utilisent des films supraconducteurs ultra-minces, dont l'épaisseur vaut moins de 10 nm, pour obtenir des temps caractéristiques très courts, de l'ordre de 10 ps (voir [FR 2 812 455]) . Pour ces films, le matériau de prédilection est le nitrure de niobium (NbN) en phase cubique B1.

Dans ces HEB, le film de NbN est épitaxié sur un substrat qui est typiquement en saphir et dont l'orientation est 1102 (plan R) ; et après structuration, ce film forme des méandres dont la largeur va de 100 nm à 200 nm, le film ayant ainsi la forme d'un serpentin dans la partie active du détecteur (voir [Villégier 04]).

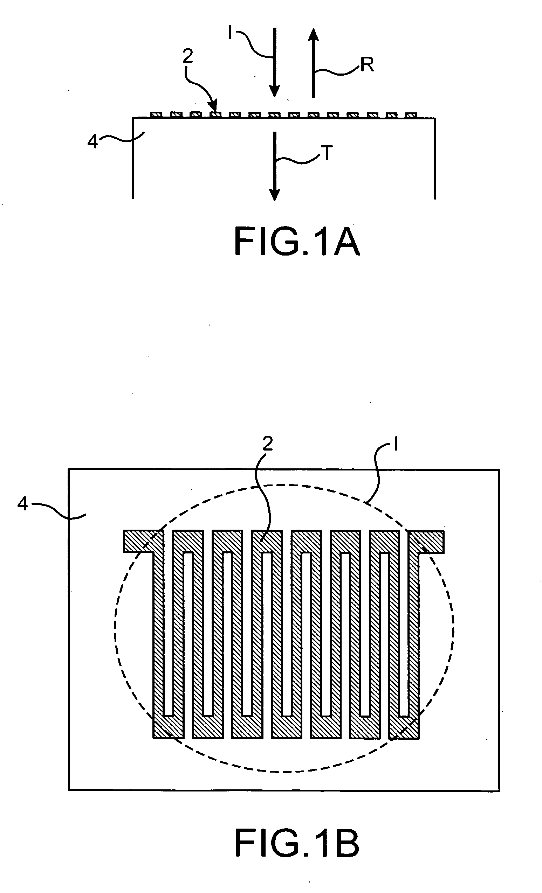

La figure 1A est une vue en coupe schématique d'un tel détecteur. Sur cette figure, le film de NbN et le substrat ont respectivement les références 2 et 4. La figure 1B est une vue de dessus schématique du détecteur.

Un faisceau lumineux I arrive sur ce dernier, sous une incidence normale, et lui est couplé par l'intermédiaire d'une fibre optique (non représentée). Les références R et T correspondent respectivement aux faisceaux lumineux réfléchi et transmis. La projection du faisceau incident I sur le détecteur est représentée en pointillés sur la figure 1B.

La fabrication, le fonctionnement et la caractérisation de ces détecteurs SSPD sont décrits par exemple dans [Goltsman 03] ou [Korneev 03]. L'efficacité de détection, ou efficacité de conversion du photon en un signal électrique, est un paramètre-clé qu'il faut optimiser et qui vaudrait 100% pour un détecteur idéal.

Il dépend du taux de remplissage (taux de recouvrement du faisceau incident et de la zone active du détecteur), de l'absorption optique dans la couche de NbN et de la capacité du point chaud (en anglais, hot spot), qui est formé par suite de l'absorption du photon, à créer une barrière résistive transitoire sur toute la largeur de la piste supraconductrice. On distingue l'efficacité de détection de l'efficacité quantique qui est définie pour un taux de recouvrement de 100%.

La structure en serpentin a été imaginée pour augmenter le taux de remplissage par rapport à une simple piste droite de NbN, déposée sur un substrat de saphir et éclairée sous une incidence normale. Dans les dernières réalisations, l'intervalle entre deux portions parallèles et adjacentes de la piste supraconductrice est aussi petit que la largeur de cette piste supraconductrice, et le taux de remplissage vaut environ 50%. Il ne peut guère dépasser cette valeur du fait des limitations technologiques actuelles, associées à la lithographie électronique qui est utilisée pour former la structure en serpentin.

On peut envisager de meilleurs taux de recouvrement avec d'autres techniques, mais une structure dont les méandres sont trop rapprochés favorise la diaphonie (en anglais, *cross-talk*) et nécessite une longueur accrue de matériau supraconducteur.

L'absorption optique par le NbN est de l'ordre de 30% pour une épaisseur de 4 nm, dans le cas des longueurs d'ondes utilisées dans les télécommunications. La seule façon de l'augmenter serait d'augmenter l'épaisseur de la couche de NbN, mais le rapport entre la section du point chaud et la section de la bande supraconductrice diminuerait, puisque la largeur de cette bande est limitée à environ 100 nm, et cela provoquerait un effondrement de l'efficacité globale (voir [Korneev 03]).

L'efficacité de détection ne peut donc excéder environ 15% avec cette architecture. Elle atteint 5% à 7% dans la dernière génération de détecteurs (voir [Korneev 04]) .

Il serait probablement difficile de faire mieux, car la grande longueur de la piste de NbN (150 µm à 200 µm lorsque cette piste est déroulée) présente deux inconvénients, à savoir la non-uniformité de la largeur de la piste et les fluctuations classiques ou quantiques. Ces deux inconvénients laissent peu d'espoir d'approcher l'efficacité maximale.

Plusieurs solutions ont été proposées pour augmenter le couplage de la lumière dans la région absorbante du détecteur.

On a par exemple proposé d'utiliser un miroir et une couche anti-reflet. La lumière qui a traversé le NbN sans avoir été absorbée est alors renvoyée sur le NbN par un miroir concave (voir [FR 2 812 455]) ou par un miroir plan (voir [Le Coupanec 03]). Le film de NbN est éventuellement recouvert d'une couche anti-reflet pour éliminer les pertes par réflexion de l'onde incidente.

L'efficacité de détection- attendue est de 40% mais elle est de toute façon limitée par le taux de remplissage (50%) qui est inhérent à toute conception de film que l'on attaque sous incidence normale.

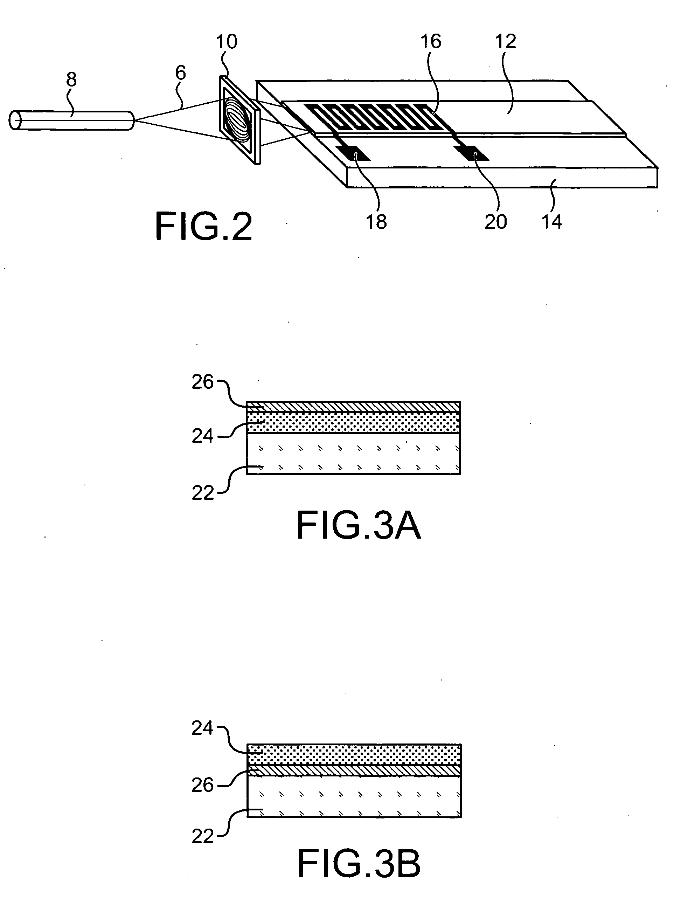

On a également proposé d'utiliser un couplage par guide d'onde (voir [Jackson 03]). Selon cette approche, qui est schématiquement illustrée par la figure 2, la lumière 6 issue d'une fibre optique monomode 8 est injectée par un élément d'optique diffractive 10 dans un guide d'onde plan multimode en silicium 12. Ce dernier est formé sur un substrat en silice 14.

Un serpentin de NbN 16 est déposé pardessus ce guide de silicium. Les extrémités de ce serpentin sont respectivement pourvues de plots de contact 18 et 20. Le serpentin 16 absorbe l'onde évanescente qui est associée au mode guidé.

Un photon, que l'on veut détecter, est susceptible d'être absorbé par une branche des méandres formés par le serpentin à chaque passage de l'onde évanescente. L'absorption de l'énergie lumineuse par le NbN peut, en principe, approcher 100% si les méandres sont suffisamment nombreux. Mais, de ce fait, l'efficacité de détection est limitée par la grande longueur de NbN.

De plus, la faisabilité de la croissance du NbN monocristallin sur le silicium n'a pas encore été clairement démontrée : la croissance épitaxiale de NbN sur Si nécessite des traitements de surface délicats du silicium ainsi que l'étude du dépôt de couches d'interface par épitaxie.

On pourra également se reporter au document [Yang 04]. Dans ce dernier, on étudie l'absorption d'une couche de NbN, placée dans un empilement de couches planes, dans lequel se propage une onde guidée.

Un exemple d'une telle structure est schématiquement représenté sur la figure 3A où l'on voit un substrat 22 recouvert d'une couche de saphir 24, servant de guide d'onde, et une couche de NbN 26 qui recouvre cette couche 24. Dans une variante, qui est schématiquement représentée sur la figure 3B, la couche de NbN est comprise entre le substrat et la couche de saphir.

Si le guide d'onde est une telle couche de saphir d'épaisseur appropriée, la longueur de NbN nécessaire pour absorber la lumière est typiquement de quelques dizaines de micromètres (les calculs étant faits en une dimension, pour des guides plans).

Cependant, ni la structuration du guide d'onde et du NbN dans le plan des couches, ni la réalisation pratique du détecteur ne sont envisagées dans ce document [Yang 04] : on n'y donne aucune solution technologique incluant le choix des matériaux, un procédé de fabrication et les modalités d'injection de la lumière dans la structure considérée.

### EXPOSÉ DE L'INVENTION

La présente invention comme définit par la revendication 1 vise à résoudre le problème de la conception d'un détecteur optique ultrasensible, à grande résolution temporelle, en particulier d'un détecteur de type SSPD, ce détecteur présentant une efficacité de détection nettement supérieure à celles qui sont obtenues dans l'art antérieur, ce détecteur étant en outre réalisable par des moyens technologiques existants.

De façon précise, la présente invention a pour objet un détecteur optique, destiné à détecter au moins un photon, ce détecteur comprenant un empilement avec un substrat diélectrique ayant un indice de réfraction n_{S} et, sur ce substrat :
- un élément de détection, prévu pour engendrer un signal électrique à partir de l'énergie du ou des photons reçus,
- une première couche diélectrique ayant un indice de réfraction n_{H},
- une deuxième couche diélectrique, placée sur la première couche diélectrique et ayant un indice de réfraction n_{E}, n_{H} étant supérieur à n_{E}, et à n_{S}, l'élément de détection étant placé entre le substrat et la première couche diélectrique ou entre les première et deuxième couches diélectriques, la première couche diélectrique constituant un guide de lumière, prévu pour guider le ou les photons dont l'énergie est alors en partie absorbée par l'élément de détection, et
- un superstrat diélectrique qui a un indice de réfraction n_{P}, n_{P}, étant supérieur à n_{S} et à n_{E}, et qui est placé sur la deuxième couche diélectrique et destiné à envoyer le ou les photons dans le guide de lumière,
les épaisseurs respectives des première et deuxième couches diélectriques étant choisies pour permettre un couplage résonnant entre le ou les photons et un mode à fuites du guide de lumière, l'empilement présentant une résonance d'absorption liée à ce mode à fuites, pour une polarisation donnée du ou des photons.

Selon un mode de réalisation préféré du détecteur objet de l'invention, l'élément de détection est placé entre le substrat et la première couche diélectrique.

De préférence, l'élément de détection a la forme d'un serpentin.

La longueur de ce serpentin est de préférence inférieure à 300µm.

Selon un mode de réalisation particulier du détecteur objet de l'invention, l'élément de détection comprend une monocouche d'un matériau qui est choisi parmi les matériaux bolométriques, les matériaux supraconducteurs et les matériaux semiconducteurs.

Cet élément de détection peut comprendre une phase de nitrure supraconductrice. Cette phase peut être du nitrure de niobium.

Le superstrat peut avoir la forme d'un prisme ou d'une demi-sphère ou d'une pièce biseautée.

En variante, ce superstrat comprend une couche diélectrique épaisse, dont l'épaisseur est au moins égale à 15 µm, ou un réseau de diffraction.

La présente invention concerne aussi un détecteur optique, destiné à détecter au moins un photon, ce détecteur comprenant :
- un séparateur de polarisations qui a une voie d'entrée et deux voies de sortie et qui est destiné à recevoir le ou les photons à détecter au niveau de la voie d'entrée et à séparer la polarisation incidente en deux composantes orthogonales au niveau de ses voies de sortie, et
- deux détecteurs optiques conformes au détecteur objet de l'invention, ces deux détecteurs optiques étant respectivement connectés optiquement à ces deux voies de sortie.

La présente invention concerne également un procédé de fabrication du détecteur objet de l'invention, dans lequel :
- on forme l'élément de détection sur un premier substrat diélectrique,
- on forme la première couche diélectrique sur l'élément de détection,
- on forme la deuxième couche diélectrique sur un deuxième substrat,
- on met en place cette deuxième couche diélectrique sur la première couche diélectrique,
- on élimine le deuxième substrat,
- on forme le superstrat, et
- on met en place ce superstrat sur la deuxième couche diélectrique.

L'invention concerne en outre un autre procédé de fabrication du détecteur objet de l'invention, dans lequel :
- on forme l'élément de détection sur le substrat diélectrique,
- on forme la première couche diélectrique sur l'élément de détection,
- on forme la deuxième couche diélectrique sur la première couche diélectrique, et
- on forme le superstrat sur la deuxième couche diélectrique.

### BREVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1A est une vue en coupe schématique d'un détecteur connu, de type SSPD, et a déjà été décrite,
- la figure 1B est une vue de dessus schématique du détecteur de la figure 1A, et a déjà été décrite,
- la figure 2 est une vue en perspective schématique d'un autre détecteur connu, de type SSPD, et a déjà été décrite,
- les figures 3A et 3B sont des vues schématiques de structures multicouches planes connues, à ondes guidées, et ont déjà été décrites,
- la figure 4A est une vue en coupe schématique de la structure générique du détecteur objet de l'invention,
- la figure 4B est une vue de dessus schématique et partielle du détecteur de la figure 4A,
- la figure 5 est une vue schématique d'un détecteur optique comprenant un séparateur de polarisations et deux détecteurs conformes à l'invention,
- la figure 6A est une vue en perspective schématique d'un premier exemple du détecteur objet de l'invention,
- la figure 6B est une vue en coupe schématique du détecteur de la figure 6A,
- la figure 6C montre les variations des coefficients de réflexion (courbe R), de transmission (courbe T) et d'absorption (courbe A) du détecteur des figures 6A et 6B, en fonction de l'angle d'incidence, sur ce détecteur, de la lumière à détecter,
- la figure 7A est une vue en coupe schématique d'un deuxième exemple de détecteur conforme à l'invention, et
- la figure 7B montre les variations des coefficients de réflexion (courbe R), de transmission (courbe T) et d'absorption (courbe A) du détecteur de la figure 7A, en fonction de l'angle d'incidence, sur ce détecteur, de la lumière à détecter.

### EXPOSE DETAILLE DE MODES DE REALISATION PARTICULIERS

La structure du détecteur optique objet de l'invention permet d'améliorer considérablement l'efficacité de détection à l'aide d'un empilement de couches diélectriques uniformes qui sont déposées sur une couche supraconductrice formant un serpentin, cette couche supraconductrice présentant une résonance en absorption liée à l'excitation d'un mode à fuites, pour une polarisation donnée. L'absorption de la lumière peut alors approcher 100% malgré un taux de recouvrement de 50%.

Il convient de noter que le détecteur objet de l'invention doit pouvoir fonctionner avec un très faible flux de photons. La probabilité d'absorption d'un photon est supposée proportionnelle à l'intensité locale du champ électromagnétique que l'on aurait avec un flux de photons important et continu (mêmes cartographies).

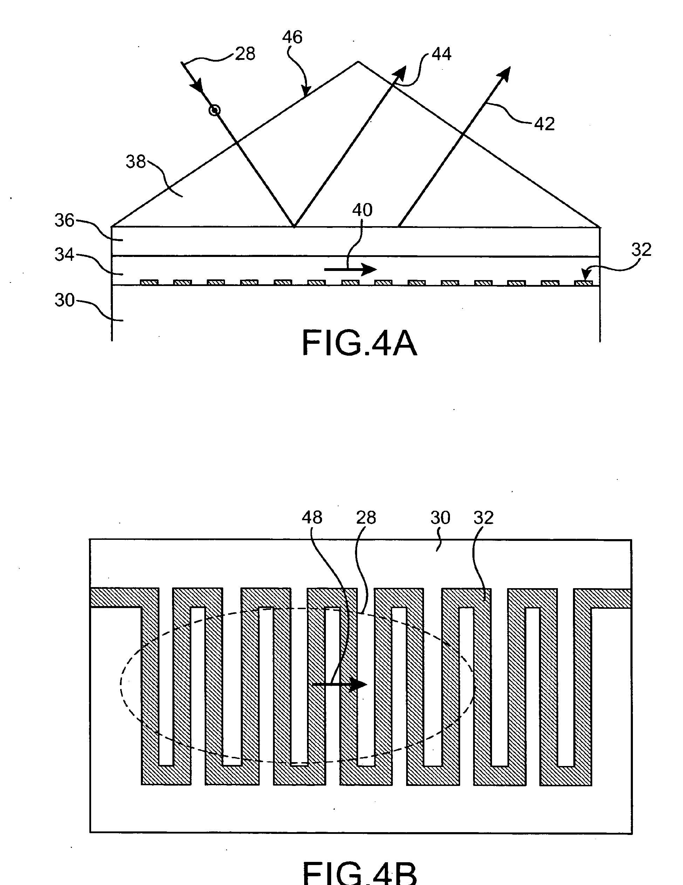

La figure 4A est une vue en coupe schématique d'un exemple du détecteur objet de l'invention. La figure 4B est une vue de dessus schématique du détecteur de la figure 4A. Ce détecteur est destiné à détecter un photon unique ou plusieurs photons, constituant un faisceau lumineux incident 28.

La structure considérée sur les figures 4A et 4B est proche à celle décrite dans le brevet FR 2 871 571 A1 et comprend un substrat diélectrique 30, dont l'indice de réfraction est noté n_{S}, et un film supraconducteur ultra-mince 32, par exemple en NbN, qui forme des méandres, comme on le voit sur la figure 4B. Le substrat 30 est approprié au dépôt de ce film 32.

Le détecteur des figures 4A et 4B comprend aussi une couche diélectrique de haut indice 34, dont l'indice de réfraction est noté n_{H}, une couche diélectrique de bas indice 36, dont l'indice de réfraction est noté n_{E}, et un superstrat diélectrique 38, dont l'indice de réfraction est noté n_{P} et qui est en forme de prisme.

Les indices de réfraction considérés vérifient les relations suivantes :
n_{P}>n_{S}, n_{P}>n_{F}, n_{H}>n_{S}, n_{H}>n_{B}.

La projection du faisceau incident 28 sur le détecteur est représentée en pointillés sur la figure 4B.

Pour un angle d'incidence déterminé, supérieur à l'angle critique arcsin(n_{S}/n_{P}), la lumière incidente 28, qui pénètre dans ce détecteur par le superstrat 38 et qui est polarisée TE, excite un mode à fuites qui est guidé par la couche de haut indice 34 et qui rayonne dans le superstrat 38.

En l'absence d'ordre diffracté, notamment lorsque le pas (en anglais, pitch) du réseau de diffraction constitué par le film 32 en forme de serpentin est suffisamment petit, les pertes d'énergie se font uniquement par absorption dans le métal supraconducteur du film et par rayonnement dans le superstrat 38. Il n'y a pas de pertes par transmission car l'angle d'incidence est supérieur à l'angle critique.

La lumière 40, qui est couplée dans le mode à fuites puis rayonnée, émerge suivant une direction 42 qui est identique à la direction de l'onde 44 réfléchie par réflexion de Fresnel sur l'interface entre la couche 36 et le superstrat 38, et interfère destructivement avec cette onde réfléchie 44. Le couplage vers le mode à fuites est résonnant pour certaines épaisseurs des couches 34 et 36. L'angle d'incidence correspondant à la résonance pour ces épaisseurs est l'angle de résonance.

L'onde couplée puis rayonnée et l'onde réfléchie ont alors la même amplitude et l'intensité lumineuse résultant de leur interférence dans la direction de la réflexion de Fresnel est nulle, ce qui maximise l'absorption (100%) dans le métal supraconducteur (absorption résonnante).

L'optimisation du couplage dans le mode à fuites par ajustement des épaisseurs respectives des couches 34 et 36 est analogue à l'optimisation du couplage vers un plasmon de surface dans la configuration de Kretschman par ajustement de l'épaisseur du métal (voir le document [Raether 88]).

On se reportera aussi au document [Tishchenko 03] qui utilise la même approche phénoménologique d'ondes couplées pour optimiser la réflexion « anormale» ou résonnante dans des guides comportant des réseaux.

Les différentes résonances qui se produisent en fonction des épaisseurs respectives des couches 34 et 36 (en particulier l'épaisseur de la couche de haut indice 34) correspondent à l'excitation de modes à fuites d'ordres différents. Le mode fondamental, correspondant à un seul maximum de champ dans la couche de haut indice 34, est excité pour la plus petite épaisseur de cette couche 34. Plus l'épaisseur de cette couche de haut indice est grande, plus l'ordre du mode excité est élevé.

Le superstrat 38 est préférentiellement en forme de prisme de façon à ce que le faisceau incident 28 puisse avoir une incidence normale (angle d'incidence de 90°) sur la face d'entrée 46 de ce prisme et subisse le moins de pertes possibles par réflexion de Fresnel sur cette face d'entrée.

En variante, pour le couplage du faisceau incident dans la structure, on peut utiliser :
- un matériau diélectrique en forme de demi-sphère,
- une couche diélectrique plane épaisse (épaisseur de l'ordre de 15 à 20 micromètres ou plus), en faisant pénétrer la lumière à détecter sous une incidence oblique, par la tranche de cette couche, si l'indice de cette couche et l'angle de la résonance permettent la propagation avec cet angle dans la couche épaisse,
- un réseau de diffraction, préférentiellement blazé (en anglais, blazed) pour avoir une bonne efficacité de couplage.

Il est préférable que l'ordre de grandeur de la longueur du serpentin déroulé soit inférieur à celui des dispositifs de l'art antérieur (typiquement 300µm), pour éviter de dégrader l'efficacité de détection et la gigue.

Dans le cas d'un détecteur à un seul pixel, il est donc souhaitable que la section du faisceau lumineux incident ne dépasse pas 10µmx10µm typiquement, dimension standard du coeur d'une fibre optique. Le faisceau incident, qui dans le meilleur des cas est limité par la diffraction, a alors une divergence non négligeable (ouverture numérique d'environ 0,1).

L'acceptance angulaire de la structure résonnante doit dépasser 15° (largeur à mi-hauteur) dans l'air pour permettre un couplage d'au moins 90% à partir d'un faisceau gaussien.

De telles valeurs sont accessibles avec des couches dont l'épaisseur valent quelques centaines de nanomètres, avec des matériaux couramment utilisés en opto-électronique (voir les exemples de structures donnés par la suite).

Le mode à fuites se propage sur une certaine distance (longueur de propagation) avant d'être absorbé. De ce fait, le film structuré en méandres doit se prolonger au-delà de la zone éclairée par le faisceau incident, dans le sens 48 (figure 4B) de la propagation du mode à fuites, pour continuer à absorber l'énergie qui se propage hors de la zone éclairée, délimitée par les pointillés sur la figure 4B.

Néanmoins, la longueur de propagation du mode à fuites doit être aussi courte que possible. En effet, dès que ce mode se propage à l'extérieur de la zone éclairée, l'onde ré-émise ne peut plus interférer avec la lumière qui subit la réflexion de Fresnel, lumière qui n'existe pas en dehors de la zone éclairée, et des pertes par rayonnement se produisent dans le superstrat.

Des résonances existent aussi dans le cas d'une polarisation TM du faisceau incident à détecter et font intervenir des modes de plasmons à l'interface supraconducteur/substrat, modes qui donnent également lieu à des fuites dans le superstrat. Ces résonances ont lieu pour des épaisseurs de couches qui sont en général différentes de celles qui correspondent au cas TE.

Par ailleurs, les résonances sont relativement peu sensibles à l'orientation des branches du serpentin par rapport au plan d'incidence de la lumière à détecter . Dans l'exemple des figures 4A et 4B, ces branches sont perpendiculaires au plan d'incidence.

Il convient en outre de noter que le détecteur objet de l'invention est conçu pour une lumière de longueur d'onde donnée, car la résonance dépend étroitement de la longueur d'onde. Il est également conçu pour une polarisation donnée (TE ou TM). Dans le cas d'un faisceau incident de polarisation inconnue, on peut utiliser un séparateur de polarisations et un détecteur tel que décrit ci-dessus sur chacune des voies de sortie de ce séparateur.

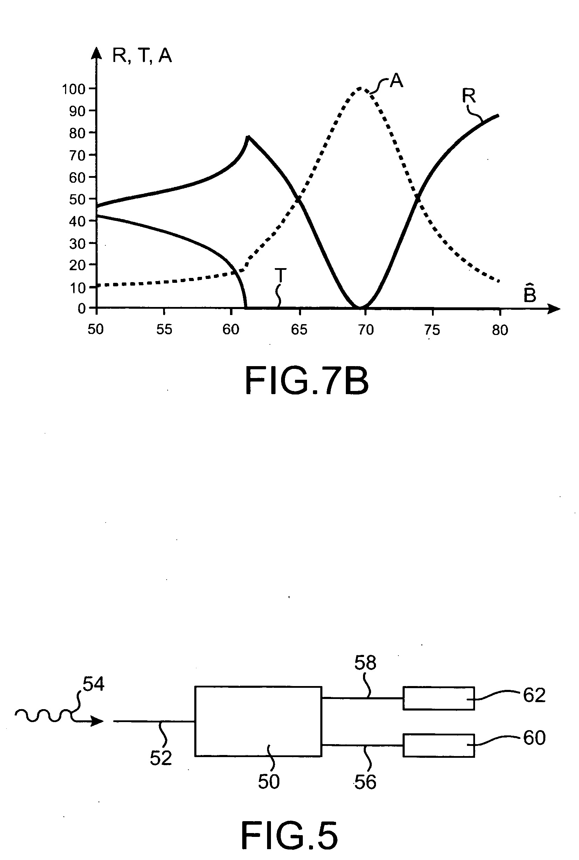

Ceci est schématiquement illustré par la figure 5 où l'on voit un séparateur de polarisations 50 dont la voie d'entrée 52 reçoit la lumière à détecter 54 et dont les deux voies de sortie 56 et 58 sont respectivement couplées à deux détecteurs conformes à l'invention 60 et 62 pour y injecter respectivement un faisceau polarisé TE et un faisceau polarisé TM, résultant de la décomposition de la lumière 54 par le séparateur 50.

La détection de l'énergie lumineuse dans le supraconducteur peut se faire:
- soit conformément au principe des bolomètres à électrons chauds à seuil, qui utilisent une polarisation en courant sous-critique (voir [Korneev 04]), en incluant ici en outre le mécanisme des PSC ou centres de glissement de phase (en anglais *phase-slip centers*),
- soit par mesure de la variation rapide du courant Josephson (détection d'un «vortex Josephson») d'une jonction supraconductrice (STJ) ou d'un SQUID,
- soit par détection de la variation d'impédance d'une jonction tunnel supraconductrice, que l'on polarise dans son « gap » de quasi-particules, suivant le principe des récepteurs SIS (en supprimant le courant Josephson au moyen d'un champ magnétique).

On donne dans ce qui suit des exemples de procédés de fabrication de détecteurs conformes à l'invention.

Un tel détecteur est réalisable par des moyens technologiques bien maîtrisés (dépôt de couches minces, report de substrats). Les épaisseurs des couches, épaisseurs qui sont prévues pour exciter un mode fondamental en polarisation TE ou TM, ne sont pas critiques (tolérance de l'ordre de ±5%), hormis l'épaisseur du supraconducteur, que l'on sait bien maîtriser par épitaxie. Les valeurs des indices de réfraction sont données à la longueur d'onde de 1,55 µm à titre d'exemple.

Les matériaux utilisés, excepté le supraconducteur, ont un coefficient d'extinction très faible, inférieur à 5x10⁻⁴, ce qui rend négligeables les pertes par absorption dans ces matériaux.

Les procédés que l'on va décrire peuvent s'appliquer à la fabrication d'un détecteur comportant un pixel unique et éclairé par une fibre optique monomode, ou à la fabrication d'une barette linéaire de pixels, cette barrette étant perpendiculaire au plan d'incidence de la lumière à détecter.

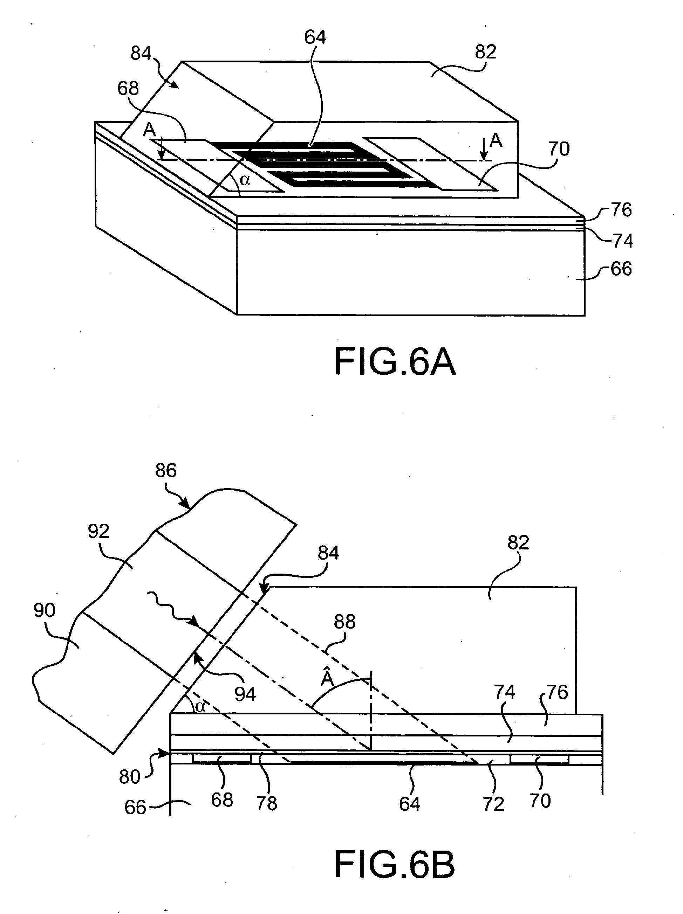

On décrit tout d'abord ci-après un procédé qui utilise un report, en faisant référence aux figures 6A à 6C.

On précise que la figure 6B est la coupe AA de la figure 6A, que les échelles ne sont pas respectées sur ces figures 6A et 6B et que les motifs de positionnement, permettant la fabrication du détecteur (SSPD) ne sont pas représentés.

Le procédé comprend les étapes 1 à 7 qui suivent.
1. On commence par déposer un film supraconducteur ultra-mince 64 en NbN, dont l'épaisseur vaut environ 4 nm et dont l'indice de réfraction n est approximativement égal à 2,5+4,5j, où j²=-1, sur un substrat de saphir 66 dont l'indice de réfraction n_{S} vaut 1,75 ; ensuite, par photolithographie et gravure, on forme une structure en méandres à partir de ce film, comme dans l'art antérieur ([FR 2 812 455)], cette structure ayant un pas de 400nm et une largeur de piste de 200nm par exemple, et l'on forme aussi des motifs de positionnement (non représentés) en NbN sur le substrat 66 ; on forme en outre des contacts électriques 68 et 70 en or ou platine, dont l'épaisseur vaut environ 15nm, aux deux extrémités du film ainsi structuré.
2. On dépose une couche 72 de SiO₂ par dessus le film et ses contacts, par pulvérisation ou par PECVD à 350°C, cette couche 72 servant de couche d'accrochage et ayant une épaisseur d'environ 60nm ; on rabote ensuite la couche 72 sur environ 40nm jusqu'à atteindre les contacts 68 et 70.
3. On prépare un substrat SOI (silicium sur isolant), comportant d'une part en surface une fine couche 74 de Si, d'épaisseur 70nm et d'indice de réfraction n_{H}=3,5, cette couche 74 comportant des motifs de positionnement (non représentés), et d'autre part une couche enterrée 76 de 220nm en SiO₂ dont l'indice de réfraction n_{E} vaut 1,45. On dépose éventuellement une couche très mince 78 de SiO₂ sur ce substrat, pour avoir une meilleure adhérence lors du collage ultérieur du substrat SOI sur le substrat 66, l'épaisseur de cette couche 78 étant de l'ordre de 5nm à 10nm. On procède ensuite à une gravure sèche ou chimique pour former des fenêtres profondes (non représentées) dans le substrat de Si (partie non représentée du substrat SOI, portant les couches 74, 76 et éventuellement 78) jusqu'à la couche 76 de SiO₂, pour dégager les contacts 68 et 70 et les motifs de positionnement.
4. On procède ensuite à un collage « pleine plaque » du substrat SOI sur le substrat 66 en saphir par adhérence moléculaire par exemple à température ambiante, après avoir procédé à un alignement dans le domaine visible à travers les couches de silice référencées 76, 78, suivant les motifs de positionnement, une précision d'alignement latéral de ±0,5µm étant largement suffisante. Eventuellement, on effectue un recuit à quelques centaines de degrés Celsius pour renforcer le collage. L'interface résultant du collage, et séparant donc la couche 72 de la couche 74 ou de l'éventuelle couche 78, a la référence 80 sur la figure 6B.
5. On procède ensuite à un amincissement du substrat de Si par polissage mécano-chimique ou par rabotage jusqu'à la couche de SiO₂ référencée 76.
6. On prépare un prisme ou une pièce biseautée 82 servant de superstrat, à partir d'un cristal de TiO₂ qui, en l'occurrence, est biréfringent. L'angle α de biseautage vaut environ 55°. Ce biseautage se fait avec une orientation appropriée de façon à maîtriser l'indice de réfraction vu par le faisceau lumineux incident. Dans l'exemple considéré, cet indice n_{P} vaut 2,45. On effectue ensuite un traitement anti-reflet de la face 84 résultant du biseautage, cette face constituant la face d'entrée de la lumière à détecter. Puis on colle par adhérence moléculaire la pièce biseautée sur la couche 76 en SiO₂, comme on le voit sur les figures 6A et 6B. Une précision de positionnement de ±1µm est largement suffisante.
7. On met ensuite en place la fibre optique 86 destinée à la propagation du faisceau lumineux incident 88 que l'on veut détecter. La gaine (en anglais, *cladding*) et le coeur (en anglais, *core*) de cette fibre ont respectivement les références 90 et 92 sur la figure 6A. Pour cette mise en place, on procède à un alignement actif de la fibre optique sur le détecteur soit par positionnement direct, soit par imagerie de la face de sortie 94 du coeur de la fibre sur la face d'entrée 84 de la pièce biseautée. Dans le premier cas, pour des raisons d'encombrement, il faut découper la puce (en anglais, *chip*) portant le détecteur à quelques dizaines de micromètres de la zone active de cette puce, zone où se trouve le détecteur, pour pouvoir approcher la fibre, de diamètre extérieur 250µm, assez près de la pièce biseautée. On établit ensuite les connexions optiques et électriques et l'on refroidit les détecteurs à leur température d'utilisation (par exemple 4K).

La taille (75mm) des substrats de saphir qui sont actuellement utilisés pour fabriquer les structures de détecteurs SSPD peut facilement être étendue à 100, 200 ou 300mm ; elle est donc compatible avec la taille des substrats de silicium utilisés dans l'industrie micro-électronique et rend possible la production à bas coût de nombreuses puces sur un même substrat.

La structure que l'on vient de décrire en faisant référence aux figures 6A et 6B est résonnante à 1,55µm dans le mode à fuites fondamental, pour une polarisation TE du faisceau à détecter. L'angle-limite au-delà duquel la transmission est nulle vaut 45,5°.

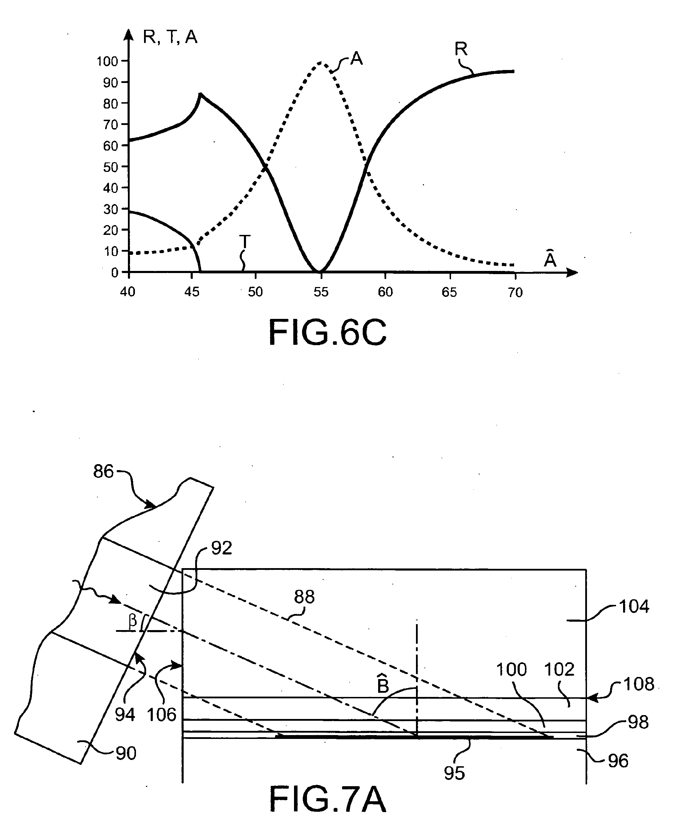

La résonance intervient pour un angle d'incidence Â de 55° sur le NbN. Si les branches du serpentin 64 sont parallèles au plan d'incidence, la largeur angulaire à mi-hauteur de la résonance vaut 8° dans le superstrat, ce qui correspond à 19° dans l'air (voir la figure 6C qui résulte d'une simulation basée sur l'analyse rigoureuse des ondes couplées (en anglais *rigorous coupled wave analysis*) ou RCWA. Cela garantit un couplage de l'ordre de 92% de la lumière incidente par l'intermédiaire du superstrat vers le mode à fuites, avec un éclairage par une fibre optique standard ayant un diamètre de mode (en anglais, *mode diameter*) de 10µm.

L'énergie couplée dans le mode à fuites est absorbée à 95% après 2µm de propagation, distance courte par rapport à la longueur de la zone éclairée (17µm), ce qui rend très faibles les pertes par rayonnement hors de la zone éclairée.

On précise que la figure 6C montre les variations des coefficients de réflexion R, de transmission T et d'absorption A en fonction de l'angle d'incidence Â de la lumière à détecter sur le film 64 en NbN, pour le détecteur que l'on a décrit en faisant référence aux figures 6A et 6B.

On décrit maintenant un procédé qui utilise un dépôt, en faisant référence aux figures 7A et 7B.

Ce procédé comprend les étapes 1 à 8 qui suivent.

On précise que les échelles ne sont pas respectées sur la figure 7A, que les contacts dont sont pourvues les extrémités du film supraconducteur en forme de serpentin ne sont pas représentés et que la réfraction de la lumière dans le détecteur (SSPD) de la figure 7A n'est pas non plus représentée.
1. On commence par déposer un film supraconducteur ultra-mince 95 en NbN, dont l'épaisseur vaut environ 4nm et dont l'indice de réfraction n vaut environ 2,5+4,5j, où j²=-1 sur un substrat 96 en saphir dont l'indice de réfraction n_{S} vaut 1,75, puis on forme une structure en méandres à partir de ce film 95, comme dans l'art antérieur ([FR 2812455]), cette structure ayant un pas de 400nm et une largeur de piste de 200nm par exemple. On forme en outre des contacts électriques (non représentés) en or ou en platine, dont l'épaisseur vaut environ 15nm. On dépose ensuite éventuellement une couche très mince 98 de SiO₂ sur le substrat 96 portant le film 95.
2. On dépose une couche 100 de TiO₂ dont l'indice de réfraction n_{H} vaut 2,3 et dont l'épaisseur vaut 220nm, par évaporation à une température d'environ 100°C, sur le substrat portant le film et ses contacts ainsi que l'éventuelle couche 98.
3. On dépose une couche 102 de SiO₂, dont l'indice de réfraction vaut 1,45 et dont l'épaisseur vaut 260nm, par évaporation ou pulvérisation à environ 100°C, sur la couche 100 de TiO₂.
4. On dépose une couche épaisse 104 de Si₃N₄ servant de superstrat, dont l'indice de réfraction vaut 2 et dont l'épaisseur est au moins égale à 20µm, par PECVD, à une température de l'ordre de 300 à 400°C, sur la couche 102 de SiO₂ Avec Si₃N₄, on peut envisager un couplage par la tranche sous incidence oblique, pour la lumière à détecter.
5. On grave des fenêtres à travers les couches déposées jusqu'à atteindre les contacts, afin de pouvoir accéder à ces derniers.
6. On découpe la puce portant le détecteur ainsi formé par «poli-sciage» (une précision de positionnement de quelques dizaines de micromètres est suffisante) et, si nécessaire, on polit la face de la puce ainsi découpée, qui est destinée à constituer la face d'entrée 106 de la lumière à détecter.
7. On effectue un traitement anti-reflet de cette face d'entrée 106.
8. On met ensuite en place la fibre optique 86 déjà mentionnée plus haut, destinée à la propagation de la lumière à détecter, par alignement actif sur le détecteur de la figure 7A. Ce positionnement est tel que l'angle d'incidence β de cette lumière sur la face d'entrée 106 soit égal à 46°, ce qui donne, par réfraction, un angle d'incidence de 69° à l'interface 108 séparant les couches 102 et 104. On établit ensuite les connexions optiques et électriques et l'on refroidit les détecteurs à leur température d'utilisation (par exemple 4K).

La structure que l'on vient de décrire en faisant référence à la figure 7A est résonnante à 1,55µm dans le mode à fuites fondamental, pour une polarisation TE du faisceau lumineux à détecter. L'angle-limite au-delà duquel la transmission est nulle vaut 61°.

La résonance intervient pour un angle d'incidence de 69° à l'interface 108. Si les méandres du serpentin 94 sont dans le plan d'incidence, la largeur angulaire à mi-hauteur de la résonance est égale à 9° dans le superstrat, ce qui correspond à 18° dans l'air (voir la figure 7B qui résulte d'une simulation basée sur la RCWA). Cela garantit un couplage de l'ordre de 92% de la lumière incidente par l'intermédiaire du superstrat vers le mode à fuites, avec un éclairage par une fibre optique standard ayant un diamètre de mode de 10µm.

L'énergie couplée dans le mode à fuites est absorbée à 95% après 3,5µm de propagation, distance courte par rapport à la longueur de la zone éclairée (27µm), ce qui rend très faibles les pertes par rayonnement hors de la zone éclairée.

On précise que la figure 7C montre les variations des coefficients de réflexion R, de transmission T et d'absorption A en fonction de l'angle d'incidence B̂ de la lumière à détecter sur le film 95 en NbN, pour le détecteur que l'on a décrit en faisant référence à la figure 7A.

A titre purement indicatif et nullement limitatif, au lieu des matériaux mentionnés plus haut pour le superstrat, la couche de haut indice et la couche de bas indice, on peut notamment utiliser les matériaux suivants (les indices de réfraction correspondants sont indiqués entre parenthèses) :
- pour le superstrat et la couche de haut indice : Si₃N₄ (2), SrTiO₃ (2,26), TiO₂ (2,45 à 2,7 suivant l'orientation du cristal), Si amorphe (3 à 3,5 suivant la teneur en hydrogène),
- pour la couche de bas indice : Al₂O₃, MgO (1,75).

Sur les figures, on n'a pas représenté les moyens de polarisation de l'élément de détection (serpentin supraconducteur) ni les moyens de traitement des signaux fournis par cet élément.

Dans les exemples de l'invention, cet élément de détection a la forme préférée d'un serpentin mais l'invention peut également être mise en oeuvre s'il a d'autres formes.

De plus, dans les exemples de l'invention, cet élément de détection est compris entre le substrat du détecteur et la couche de haut indice de ce dernier. Cependant, l'invention peut également être mise en oeuvre si cet élément de détection est compris entre la couche de bas indice et la couche de haut indice.

De plus, au lieu d'utiliser un superstrat en forme de prisme ou de pièce biseautée, on peut utiliser un superstrat en forme de demi-sphère qui permet aussi une incidence normale (suivant un rayon de la demi-sphère) de la lumière à détecter.

On peut aussi utiliser un superstrat contenant un réseau de diffraction pour envoyer la lumière à détecter dans la couche de haut indice.

En outre, au lieu du NbN, on peut utiliser d'autres matériaux supraconducteurs pour former l'élément de détection, par exemple d'autres phases nitrures (MoN, TiN,...) ou des phases de cuprates (YBa₂Cu₃O₇₋ₓ, ReBa₂Cu₃O₇₋ₓ,...).

Plus généralement, au lieu d'être fait d'un matériau supraconducteur, cet élément de détection peut être fait de tout matériau apte à détecter une faible énergie lumineuse et à restituer un signal électrique correspondant à cette énergie. Ce peut être par exemple un matériau semiconducteur ou bolométrique.

Les documents cités dans la présente description sont les suivants :
[FR 2 812 455] FR 2 812 455 A, invention de R. Sobolewski et al. (Schlumberger and Rochester University, 2/2002)
[Gol'tsman 03] Gol'tsman et al.,"Fabrication of Nanostructured Superconducting Single Photon Detectors", IEEE Transactions on Applied Superconductivity, 13(2), 192, June 2003
[Jackson 03] D. Jackson, J. Stern, "High bandwith, improved quantum efficiency detector development for multi-GHz class OKD throughput", Jet Propulsion Laboratory, California Institute of Technology, Single Photon Detector Workshop, NIST, Gaithersburg, 4/2003
[Korneev 03] A. Korneev et al., "GHz counting rate NbN single-photon detector for IR diagnostics of VLSI CMOS circuits", Microelectronics Engineering 69, 274 (2003)
[Korneev 04] A. Korneev et al., "Sensitivity and gigahertz counting performance of NbN superconducting single-photon detectors", Appl. Phys. Lett. 84, 5338 (2004).
[LeCoupanec 03] LeCoupanec, W.K. Lo, K.R. Wilsher, "An ultra-low dark count and jitter, superconducting, single-photon detector for emission timing analysis of integrated circuits", Microelectronics Reliability, 43 (2003), 1621
[Raether 88] H. Raether, "Surface plasmons on smooth and rough surfaces and on gratings", Springer, Berlin, 1988
[Romestain 04] R. Romestain et al., "Fabrication of superconducting niobium nitride hot electron bolometer for single photon counting", New Journal of Physics, 6, 129, 2004
[Tishchenko 03] E. Bonnet et al, "High resonant reflection of a confined free space beam by a high contrast segmented waveguide", Opt. Quant. Elec. 35, 1025 (2003)
[Verevkin 03] A. Verevkin et al., "GHz-Rate Superconducting Photon Counting Detector", Single Photon Detector Workshop, NIST Gaithersburg, 4/2003
[Villégier 04] J.C. Villégier, "Fabrication of High-Speed Single Photon Detectors and Analog-to-Digital Modulators in NbN Technology for Quantum Information Processing", invited conference, workshop WEH 28 Nov.-3 Dec., Bad Honnef, D
[Yang 04] F. Wang, "Photo-détecteurs supraconducteurs pour l'information quantique photonique", rapport de stage d'option scientifique, Ecole Polytechnique, juillet 2004.

## Revendications

1. Détecteur optique, destiné à détecter au moins un photon, ce détecteur comprenant un empilement avec un substrat diélectrique (30, 66, 96) ayant un indice de réfraction n_{S} et, sur ce substrat :
- une première couche diélectrique (34, 72, 100) ayant un indice de réfraction n_{H},
- une deuxième couche diélectrique (36, 74, 102), placée sur la première couche diélectrique et ayant un indice de réfraction n_{E}, n_{H} étant supérieur à n_{B} et à n_{S}, la première couche diélectrique constituant un guide de lumière, et
- un superstrat diélectrique (38, 82, 104) qui a un indice de réfraction n_{P}, n_{P} étant supérieur à n_{S} et à n_{B}, et qui est placé sur la deuxième couche diélectrique et destiné à envoyer le ou les photons dans le guide de lumière,
ce détecteur étant **caractérisé en ce qu'**il comprend en outre :
- un élément de détection (32, 64, 95), prévu pour engendrer un signal électrique à partir de l'énergie du ou des photons reçus, l'élément de détection étant placé entre le substrat et la première couche diélectrique ou entre les première et deuxième couches diélectriques, le guide de lumière est prévu pour guider le ou les photons dont l'énergie est alors en partie absorbée par l'élément de détection et
les épaisseurs respectives des première et deuxième couches diélectriques sont choisies pour permettre un couplage résonnant entre le ou les photons et un mode à fuites du guide de lumière, l'empilement présentant une résonance d'absorption liée à ce mode à fuites, pour une polarisation donnée du ou des photons.

2. Détecteur selon la revendication 1, dans lequel l'élément de détection (32) est placé entre le substrat (30) et la première couche diélectrique (34).

3. Détecteur selon l'une quelconque des revendications 1 et 2, dans lequel l'élément de détection (32) a la forme d'un serpentin.

4. Détecteur selon la revendication 3, dans lequel la longueur du serpentin est inférieure à 300µm.

5. Détecteur selon l'une quelconque des revendications 1 à 4, dans lequel l'élément de détection (32) comprend une monocouche d'un matériau qui est choisi parmi les matériaux bolométriques, les matériaux supraconducteurs et les matériaux semiconducteurs.

6. Détecteur selon l'une quelconque des revendications 1 à 5, dans lequel l'élément de détection (32) comprend une phase de nitrure supraconductrice.

7. Détecteur selon la revendication 6, dans lequel cette phase est du nitrure de niobium.

8. Détecteur selon l'une quelconque des revendications 1 à 7, dans lequel le superstrat (38) a la forme d'un prisme ou d'une demi-sphère ou d'une pièce biseautée.

9. Détecteur selon l'une quelconque des revendications 1 à 7, dans lequel le superstrat (38) comprend une couche diélectrique épaisse, dont l'épaisseur est au moins égale à 15 µm, ou un réseau de diffraction.

10. Détecteur optique, destiné à détecter au moins un photon, ce détecteur comprenant :
- un séparateur de polarisations (50) qui a une voie d'entrée et deux voies de sortie et qui est destiné à recevoir le ou les photons à détecter au niveau de la voie d'entrée et à séparer la polarisation incidente en deux composantes orthogonales au niveau de ses voies de sortie, et
- deux détecteurs optiques (58, 60) conformes à l'une quelconque des revendications 1 à 9, ces deux détecteurs optiques étant respectivement connectés optiquement à ces deux voies de sortie.

11. Procédé de fabrication du détecteur selon l'une quelconque des revendications 1 à 9, dans lequel :
- on forme l'élément de détection (64) sur un premier substrat diélectrique (66),
- on forme la première couche diélectrique (72)sur l'élément de détection,
- on forme la deuxième couche diélectrique (74) sur un deuxième substrat,
- on met en place cette deuxième couche diélectrique (74) sur la première couche diélectrique (72),
- on élimine le deuxième substrat,
- on forme le superstrat (82), et
- on met en place ce superstrat sur la deuxième couche diélectrique (74).

12. Procédé de fabrication du détecteur selon l'une quelconque des revendications 1 à 9, dans lequel :
- on forme l'élément de détection (95) sur le substrat diélectrique (96),
- on forme la première couche diélectrique (100) sur l'élément de détection (95),
- on forme la deuxième couche diélectrique (102) sur la première couche diélectrique (100), et
- on forme le superstrat (104) sur la deuxième couche diélectrique (100).

## Claims

1. Optical detector, intended to detect at least one photon, said detector comprising a stacking with a dielectric substrate (30, 66, 96) having a refractive index n_{S} and, on this substrate:
- a first dielectric layer (34, 72, 100) having a refractive index n_{H},
- a second dielectric layer (36, 74, 102), placed on the first dielectric layer and having a refractive index n_{B}, n_{B} being greater than n_{E} and n_{S}, the first dielectric layer constituting a light guide, and
- a dielectric superstrate (38, 82, 104) that has a refractive index n_{E}, n_{P} being greater than n_{S} and H_{B}, and which is placed on the second dielectric layer and intended to send the photon(s) into the light guide,
said detector being **characterised in that** it further comprises:
a detection element (32, 64, 95), provided to generate an electrical signal from the energy of the photon(s) received, the detection element being placed between the substrate and the first dielectric layer or between the first and second dielectric layers, the light guide is provided to guide the photon(s), the energy of which is then in part absorbed by the detection element, and
the respective thicknesses of the first and second dielectric layers are chosen to enable a resonant coupling between the photon(s) and a leakage mode of the light guide, the stacking having an absorption resonance linked to this leakage mode, for a given polarization of the photon(s).

2. Detector according to claim 1, wherein the detection element (32) is placed between the substrate (30) and the first dielectric layer (34).

3. Detector according to any of claims 1 and 2, wherein the detection element (32) has the shape of a serpentine.

4. Detector according to claim 3, wherein the length of the serpentine is less than 300 µm.

5. Detector according to any of claims 1 to 4, wherein the detection element (32) comprises a single layer of a material that is chosen among bolometric materials, superconducting materials and semiconducting materials.

6. Detector according to any of claims 1 to 5, wherein the detection element (32) comprises a superconducting nitride phase.

7. Detector according to claim 6, wherein this phase is of niobium nitride.

8. Detector according to any of claims 1 to 7, wherein the superstrate (38) has the shape of a prism or a hemisphere or a bevelled piece.

9. Detector according to any of claims 1 to 7, wherein the superstrate (38) comprises a thick dielectric layer, the thickness of which is at least equal to 15 µm, or a diffraction grating.

10. Optical detector, intended to detect at least one photon, said detector comprising:
- a polarization separator (50) that has one input path and two output paths and which is intended to receive the photon(s) to be detected at the input path and to separate the incident polarization into two orthogonal components at its output paths, and
- two optical detectors (58, 60) according to any of claims 1 to 9, these two optical detectors being respectively optically connected to these two output paths.

11. Method of making the detector according to any of claims 1 to 9, wherein:
- the detection element (64) is formed on a first dielectric substrate (66),
- the first dielectric layer (72) is formed on the detection element,
- the second dielectric layer (74) is formed on a second substrate,
- this second dielectric layer (74) is put in place on the first dielectric layer (72),
- the second substrate is eliminated,
- the superstrate (82) is formed, and
- this superstrate is put in place on the second dielectric layer (74).

12. Method of making the detector according to any of claims 1 to 9, wherein:
- the detection element (95) is formed on the dielectric substrate (96),
- the first dielectric layer (100) is formed on the detection element (95),
- the second dielectric layer (102) is formed on the first dielectric layer (100), and
- the superstrate (104) is formed on the second dielectric layer (100).

## Patentansprüche

1. Optischer Detektor zum Nachweisen wenigstens eines Photons, wobei dieser Detektor eine Stapelung mit einem einen Brechungsindex n_{S} aufweisenden dielektrischen Substrat (30, 66, 96) und auf diesem Substrat Folgendes umfasst:
- eine erste dielektrische Schicht (34, 72, 100), die einen Brechungsindex n_{H} aufweist,
- eine zweite dielektrische Schicht (36, 74, 102), die sich auf der ersten dielektrischen Schicht befindet und einen Brechungsindex n_{B} aufweist, wobei n_{H} größer als n_{B} und n_{S} ist, und die erste dielektrische Schicht einen Lichtleiter darstellt, und
- ein dielektrisches Superstrat (38, 82, 104), das einen Brechungsindex n_{P} aufweist, wobei n_{P} größer als n_{S} und als n_{B} ist, und das sich auf der zweiten dielektrischen Schicht befindet und dazu bestimmt ist, das oder die Photonen in den Lichtleiter zu senden, wobei dieser Detektor **dadurch gekennzeichnet ist, dass** er außerdem Folgendes umfasst:
- ein Nachweiselement (32, 64, 95), das zum Senden eines elektrischen Signals aus der Energie des oder der empfangenen Photonen vorgesehen ist, wobei sich das Nachweiselement zwischen dem Substrat und der ersten dielektrischen Schicht oder zwischen der ersten und zweiten dielektrischen Schicht befindet, der Lichtleiter zum Leiten des oder der Photonen vorgesehen ist, deren Energie dann zum Teil von dem Nachweiselement absorbiert wird, und die jeweiligen Dicken der ersten und zweiten dielektrischen Schicht so gewählt sind, dass sie eine Resonanzkopplung zwischen dem oder den Photonen und einen Leckmodus des Lichtleiters ermöglichten, wobei die Stapelung für eine gegebene Polarisation des oder der Photonen eine mit diesem Leckmodus verbundene Absorptionsresonanz aufweise.

2. Detektor gemäß Anspruch 1, bei dem sich das Nachweiselement (32) zwischen dem Substrat (30) und der ersten dielektrischen Schicht (34) befindet.

3. Detektor gemäß einem der Ansprüche 1 und 2, bei dem das Nachweiselement (32) die Form einer Schlange aufweist.

4. Detektor gemäß Anspruch 3, bei dem die Länge der Schlange kleiner als 300 µm ist.

5. Detektor gemäß einem der Ansprüche 1 bis 4, bei dem das Nachweiselement (32) eine Monoschicht eines Materials umfasst, das aus bolometrischen Materialien, supraleitenden Materialien und Halbleitermaterialien ausgewählt ist.

6. Detektor gemäß einem der Ansprüche 1 bis 5, bei dem das Nachweiselement (32) eine supraleitende Nitridphase umfasst.

7. Detektor gemäß Anspruch 6, bei dem diese Phase Niobiumnitrid ist.

8. Detektor gemäß einem der Ansprüche 1 bis 7, bei dem das Superstrat (38) die Form eines Prismas oder einer Halbkugel oder eines abgeschrägten Teils aufweist.

9. Detektor gemäß einem der Ansprüche 1 bis 7, bei dem das Superstrat (38) eine dicke dielektrische Schicht, deren Dicke wenigstens 15 µm beträgt, oder ein Beugungsgitter umfasst.

10. Optischer Detektor, der zum Nachweisen wenigstens eines Photons bestimmt ist, wobei dieser Detektor
- einen Polarisationsteiler (50), der einen Eintrittspfad und zwei Austrittspfade aufweist und der dazu bestimmt ist, das oder die nachzuweisenden Photonen im Eintrittspfad zu empfangen und die Eirfallspolarisation in ihren Austrittspfaden in zwei zueinander senkrechte Komponenten aufzuteilen, und
- zwei optische Detektoren (58, 60) gemäß einem der Ansprüche 1 bis 9 umfasst, wobei diese beiden optischen Detektoren jeweils mit diesen beiden Austrittspfade optisch verbunden sind.

11. Verfahren zur Herstellung des Detektors gemäß einem der Ansprüche 1 bis 9, bei dem
- das Nachweiselement (64) auf einem ersten dielektrischen Substrat (66) gebildet wird,
- die erste dielektrische Schicht (72) auf dem Nachweiselement gebildet wird,
- die zweite dielektrische Schicht (74) auf einem zweiten Substrat gebildet wird,
- diese zweite dielektrische Schicht (74) auf der ersten dielektrischen Schicht (72) angebracht wird,
- das zweite Substrat entfernt wird,
- das Superstrat (82) gebildet wird und
- dieses Superstrat auf der zweiten dielektrischen Schicht (74) angebracht wird.

12. Verfahren zur Herstellung des Detektors gemäß einem der Ansprüche 1 bis 9, bei dem
- das Nachweiselement (95) auf dem dielektrischen Substrat (96) gebildet wird,
- die erste dielektrische Schicht (100) auf dem Nachweiselement (95) gebildet wird,
- die zweite dielektrische Schicht (102) auf der ersten dielektrischen Schicht (100) gebildet wird rund
- das Superstrat (104) auf der zweiten dielektrischen Schicht (100) gebildet wird.
